**Europäisches Patentamt**

**European Patent Office**

**Office européen des brevets**

(19)

(11) Publication number : **0 570 218 A1**

# (12) EUROPEAN PATENT APPLICATION

(21) Application number : **93303696.4**

(22) Date of filing : **13.05.93**

(51) Int. Cl.$^5$ : **B01J 8/40,** B01J 2/16, F26B 3/092

(30) Priority : **13.05.92 JP 165250/92**
**11.05.93 JP 145333/93**

(43) Date of publication of application :
**18.11.93 Bulletin 93/46**

(84) Designated Contracting States :
**AT CH DE FR GB IT LI**

(71) Applicant : **MATSUI MANUFACTURING CO.,**
**LTD.**
**5-26, 6-chome Tanimachi**
**Chuo-ku, Osaka-shi, Osaka-fu 542 (JP)**

(72) Inventor : **Hiroshi, Tada, c/o Matsui**
**Manufacturing Co., Ltd.**
**Techn. Developing Ctr, 10-4 Nagaokagumachi**
**1-chome**
**Hirakata-shi, Osaka-fu 573-01 (JP)**

Inventor : **Masaaki, Nosaka, c/o Matsui**
**Manufacturing Co., Ltd**
**Techn. Developing Ctr, 10-4 Nagaokagumachi**
**1-chome**
**Hirakata-shi, Osaka-fu 573-01 (JP)**
Inventor : **Hitoshi, Takebayashi, c/o Matsui**
**Manufact. Co. Ltd**
**Techn. Developing Ctr, 10-4 Nagaokagumachi**
**1-chome**
**Hirakata-shi, Osaka-fu 573-01 (JP)**
Inventor : **Yorinobu, Takino, c/o Matsui**
**Manufact. Co., Ltd**
**Techn. Developing Ctr, 10-4 Nagaokagumachi**
**1-chome**
**Hirakata-shi, Osaka-fu 573-01 (JP)**
Inventor : **Osamu, Matsui**
**5-26, Tanimachi 6-chome, Chuo-ku**
**Osaka-shi, Osaka-fu 54 (JP)**

(74) Representative : **Bond, Bentley George et al**
**HASELTINE LAKE & CO. Hazlitt House 28**
**Southampton Buildings Chancery Lane**
**London, WC2A 1AT (GB)**

(54) **Processes and apparatuses for granulating and drying particulate materials.**

(57) A process and apparatus for drying or granulating particulate materials. The process comprises permitting vibrating air to act on a particulate material (a) fed from above a perforated member horizontally provided in a casing body, thereby drying or granulating the particulate material (a) while fluidizing it. For granulation, a binder is sprayed through a binder nozzle. The granulating apparatus comprises a casing body (1), an air vibration generator (21) that provides vibrating air, and a binder nozzle (46).

FIG. 1

EP 0 570 218 A1

The present invention relates to processes and apparatuses for granulating and drying particulate materials including pulverized films, fine strips, various powders and particles, pellets and flakes comprising animals or plants (hereinafter simply referred to as "particulate materials".

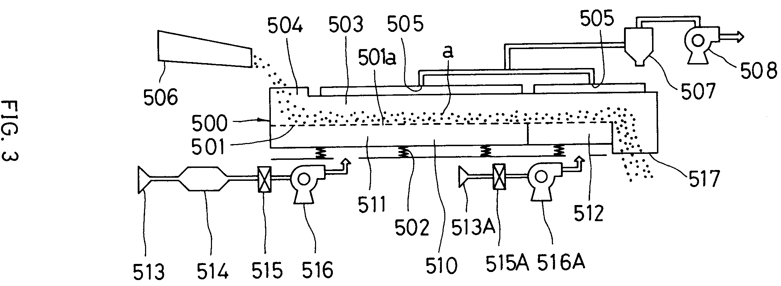

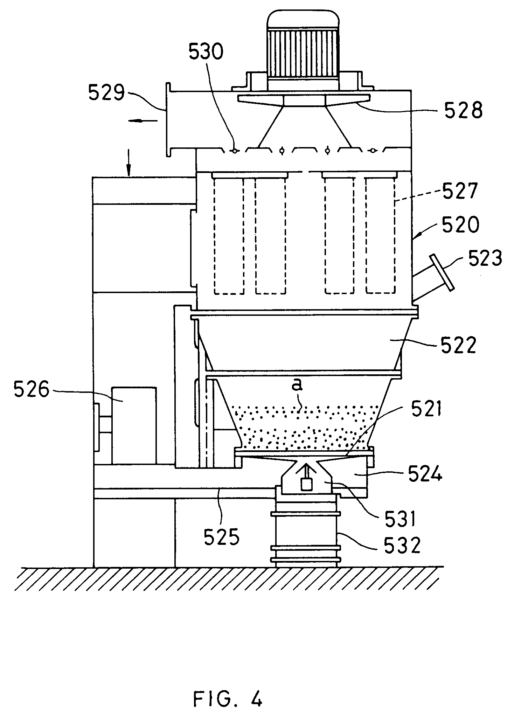

FIGURES 3 and 4 show known drying apparatuses for particulate materials.

The drying apparatus shown in FIGURE 3 is a fluidized-bed drying and cooling apparatus of mechanical vibration type, which is used for particulate materials comprising any material such as chemical fertilizers, resins, chemical seasoners, granulated sugar or medicines. The main body 500 of the drying apparatus is also called "trough" and, its inside being divided into upper and lower spaces by a perforated member, is mechanically supported in such a manner as to be able to be vibrated vertically. 502 are springs for damping purpose. The upper space 503 is provided with a feed port 504 and gas vents 505. To the feed port 504, a particulate material a is fed from above through a shoot 506. The gas vents 505 are connected to a cyclone 506 and a blower 508 via piping. The lower space 510 comprises a drying zone 511 and a cooling zone 512, to which heated air and cooled air are supplied through filters 513 and 513A, an air heater (no heater for cooled air), dampers 515 and 515A and blowers 516 and 516A, respectively.

Hot air is supplied from below into the lower space 510, and then permitted to blow upwardly through a multiplicity of small holes 501a of the perforated member 501. The particulate material a fed is made to float by action of this hot air and is, with mechanical vibration, transported toward an outlet 517. The particulate material a is thus dried in the drying zone 511, then cooled in the cooling zone 512 and taken out through the outlet 517.

FIGURE 4 shows another drying apparatus for particulate materials. This apparatus comprises a vertical main body 520 provided at a lower part of the inside thereof with a horizontally placed perforated member 521. A particulate material a is introduced through a feed port 523 into the space 522 above the perforated member 521. The space 524 below the perforated member 521 is connected with a hot air duct 525, from which hot air heated with a heater 526 is introduced and passes through a multiplicity of holes of the perforated member 521 to act on the particulate material a.

The hot air is permitted to pass through a multiplicity of holes of the perforated member 521 and reach the space 522, where it fluidizes the particulate material a and dries it. The air after the drying process moves upwardly and, after passing through bag filters 527, is discharged by a fan 528 through an exhaust vent 529 (one-path system). The bag filters 527 can be back-washed by closing the corresponding scraping-down dampers 530. The particulate material a is taken out through a product outlet port 531 into a recervoir 532.

Various apparatuses for granulating powders or granular materials are known, such as one utilizing mechanical vibration and one comprising fluidizing a powder or granular material with air from a blower.

One of the latter, i.e. fluidized-bed granulating process is described in detail. The apparatus (not shown) for the process comprises a hopper-shaped container body possessing an inlet and outlet for the material to be processed and, horizontally provided at a lower part of the inside thereof, a perforated member having a multiplicity of small holes. Air from a blower is blown against the material from below the perforated member. The container body is equipped, at an upper part above the perforated member, with a nozzle for binder, which sprays a liquid binder to the fluidized bed of the material.

With the drying apparatuses for particulate materials shown in FIGURES 3 and 4, which simply pass hot air to fluidize and dry the particulate material present on the perforated member, a considerably large volume of air and quantity of heat are required in order to increase drying effect. Then, particles constituting the particulate material will rub against each other, whereby dust generates in a large amount. Such a large amount of dust may cause, for some products, some of the dust to adhere to the surface of the product, thereby rendering it impossible to assure good quality. Lighter particulate materials may float up and, not only become difficult to recover, but clog in the above bag filters in a large amount. Furthermore, a large volume of exhaust becomes necessary, which requires, with one-path system, that measures be taken against exhaust heat and discharged dust.

The above granulating process utilizing mechanical vibration often suffers the problem of clogging of the material to be granulated in a multiplicity of small holes of the perforated member. Besides, it is difficult to adjust the size and density of the resulting granules optionally.

The above granulating process that comprises fluidizing the material with air is, the fluidization being effected with a high-flow-rate air, uneconomical for materials having a large particle size or high specific gravity such as metal powder that require increased flow rate. Another problem is that particles constituting the material tend to be separated according to their particle size and specific gravity. Furthermore, materials having smaller particle size often cause irregular phenomena to occur, such as slugging, channelling and bubbling that prohibit fluidization, so that the obtained product granules have a variety of shapes and become of light weight.

Accordingly, an object of the present invention is to provide a process for drying particulate materials effectively and with only a small amount of energy, the process being capable of suppressing the amount of dust generation so that the dried material has good quality and, for lighter particulate materials, taking them out without unnecessarily causing them to float up, thereby minimizing troubles associated with exhaust heat and discharged dust.

Another object of the present invention is to provide an apparatus usable for the above drying process.

Still another object of the present invention is to provide a process for granulating particulate materials having advantages including readily adjustability of the density of the obtained granules and smooth fluidization.

Yet another object of the present invention is to provide an apparatus usable for the above granulating process.

These objects, as well as other objects, of the invention and features and advantages thereof will become apparent in the course of the following description.

To solve the above problems, the present invention employs vibrating air in conducting drying or granulation.

Thus, the present invention provides a process for drying particulate materials, which comprises feeding a particulate material from above a perforated member horizontally provided in the body of a casing and permitting vibrating air to act on the particulate material present on the perforated member, thereby fluidizing and drying the particulate material and sending out the dried material towards a product outlet. In this process, it is desirable that the particulate material present on the perforated member be heated and that the inside of the casing body be under reduced pressure.

The present invention also provides a process for granulating particulate materials, which comprises feeding a particulate material fed from above a perforated member horizontally provided in the body of a casing and, while spraying a binder to the particulate material fed over the perforated member, permitting vibrating air to act on the particulate material, to obtain granules.

In this process, it is desirable to heat and dry the particulate material while the binder is being sprayed thereto. It is also desirable to make the inside of the casing body be under reduced pressure.

The present invention further provides an apparatus for performing the above drying process, which comprises:

a casing body with its inside being divided by a perforated member into an upper space and an lower space, said upper space being provided with a feed port for a particulate material and an exhaust vent; and

an air vibration generator that provides air with vibration of low frequency or medium frequency and provides the inside of said casing body with the vibrating air thus obtained.

The above drying apparatus preferably further comprises a heating device comprising a heater and an air-supplying apparatus for supplying hot vibrating air to the inside of said casing body and, further, a heating means provided in the casing body for heating the particulate material present in the upper space. It is also preferred that the drying apparatus be provided with a pressure-reducing means for reducing the pressure inside the casing body.

It is desirable that the drying apparatus further comprise a circulating line formed by connecting through piping the exhaust vent side and the heating device side of the casing body, to which circulating line either dry air is supplied or a dehumidifying unit is connected so that air circulating in the line can be dehumidified.

The present invention still further provides an apparatus for granulating particulate materials, which comprises, in addition to the construction of the above drying apparatus for particulate materials, a binder nozzle for spraying a binder to the particulate material fed over the perforated member, to obtain granules therefrom.

The granulating apparatus also preferably further comprises, like with the above drying apparatus, a heating device comprising a heater and an air-supplying apparatus for supplying hot vibrating air to the inside of the casing body, thereby accelerating drying of the particulate material. It is also desirable, like with the above drying apparatus, that the granulating apparatus further comprise a circulating line formed by connecting through piping the exhaust vent side and the heating device side of the casing body, to which circulating line either dry air can be supplied or a dehumidifying unit is connected so that air circulating in the line can be dehumidified.

A more complete appreciation of the invention and many of the attendant advantages thereof will be readily obtained as the same become better understood by reference to the following detailed description when considered in connection with the accompanying drawings, wherein:

FIGURE 1 shows a schematic view of a first embodiment of the granulating and drying apparatus of the present invention;

FIGURE 2 shows a schematic view of a second embodiment of the granulating and drying apparatus of the present invention;

FIGURE 3 shows a schematic view of a conventional vibration fluidized-bed drying apparatus; and

FIGURE 4 shows a schematic view of another conventional vibration fluidized-bed drying apparatus.

The vibrating air used in the present invention is obtained by permitting air to vibrate at a low frequency or medium frequency. It is desirable that the waveform of the vibrating air be changeable into any optional form such as pulse wave or sine wave.

In the drying process of the present invention, a particulate material is fed from over a perforated member horizontally provided inside a casing body and vibrating air comprising acoustic wave, i.e. air having alternate positive and/or negative waveforms (pulsation wave) is permitted to act on the particulate material. Then, the vibrating air causes particles constituting the particulate material to be turned over upside down repeatedly and be fluidized, so that the material can be dried uniformly. The material thus dried sufficiently is then conveyed by vibration energy of the vibrating air towards the product outlet and sent out therethrough. This process realizes uniform and effective drying even at low air flow rate. Such low air flow rate in turn prevents even very light particles from unnecessarily floating up and eliminates problems associated with exhaust heat and discharged dust.

In this process, it is possible and desirable to heat the particulate material over the perforated member with a heating means. In this case heat energy contacts the particulate material to an extremely large extent thanks to the vibration energy of the vibrating air, and hence even a small amount of heat energy can help drying the particulate material rapidly and effectively. The drying rate can also be made higher by conducting the above drying while reducing the pressure inside the casing body compared with drying under atmospheric pressure.

The process for granulating particulate materials of the present invention further comprises, besides the steps described above in the description of the drying process, i.e. the step of feeding a particulate material from above a perforated member, the step of applying vibrating air to the particulate material and the step of discharging the material, spraying a binder to the particulate material fed from above the perforated member, thereby obtaining granules. Then, since vibrating air wave having alternate positive and/or negative waveforms (pulsation wave) causes the layer of the particulate material itself to be fluidized, when heating is also employed, lower heating temperature will work even for particulate materials having high specific gravity compared with conventional granulating system. This system can also effectively granulate materials having low specific gravity. Besides, appropriate setting of the frequency of the vibrating air used can realize optional adjustment of the density, i.e. adjustment to heavier weight or lighter weight. For example, higher frequency leads to heavier weight, while lower frequency to lower weight.

It is possible, while spraying binder to the particulate material over the perforated member, to heat the material with a heating means. Heat energy created by the heating, as well as the binder sprayed, contacts the particulate material extremely frequently and in an extremely large area thanks to the vibration energy of the vibrating air, so that uniform granulation can be effected. Reduction of the pressure inside the casing body during the granulation with vibrating air also increases granulation rate.

The granulating apparatus of the present invention is, while being useful for granulating particulate materials, also usable as a drying apparatus for particulate materials when its binder nozzle is not used. Accordingly, the single apparatus can be selectively used either for drying or granulation. In other words, the drying apparatus of the present invention can be modified simply by providing a binder nozzle, to an apparatus that can be used either for drying or granulation of particulate materials.

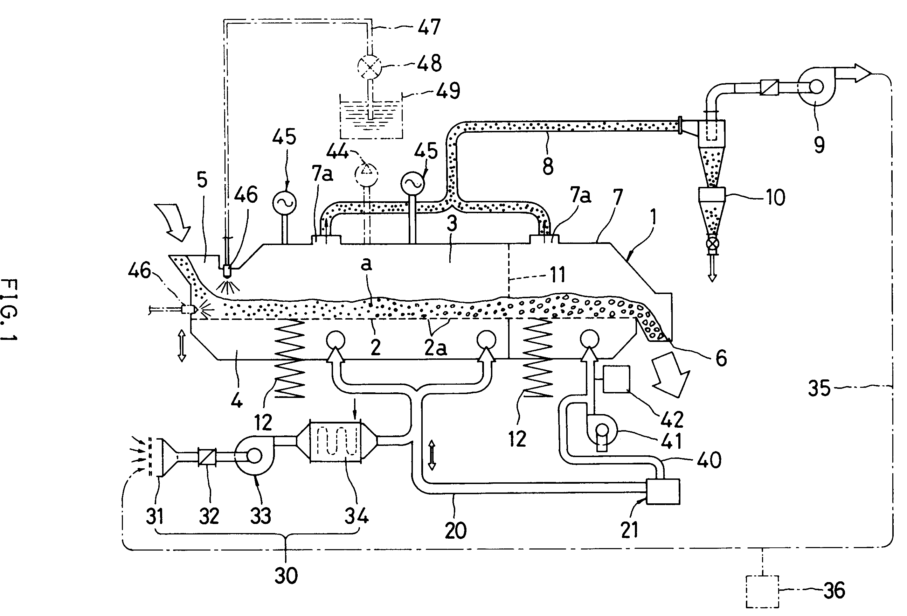

An embodiment of the granulating and drying apparatus of the present invention is now described in more detail by reference to FIGURE 1. The granulating and drying apparatus for particulate materials shown in FIGURE 1 is of vibration-fluidized bed system and comprises a casing body 1. The casing body (trough) 1 has inner space, which is divided by a perforated member 2 (punched plate in this embodiment) into upper and lower spaces. The upper space 3 and the lower space 4 connect with each other through a multiplicity of small holes 2a. The upper space 3 is provided with a feed port 5 for particulate materials and an outlet port 6. The perforated member 2 may be a net-like material. A feed pipe (not shown) is provided facing and from above the feed port 5. Top lid 7 has exhaust vents 7a, to which is connected exhaust piping 8 the other end of which is again connected to a blower 9 and a cyclone 10. Dust (dried powder) is discharged from the cyclone 10.

Inside the casing body 1 is provided a microwave shielding plate 11 in such a position as to shield the fore part from the rear part of the casing. The perforated member 2 is slightly so inclined as to sink towards the outlet port 6 so that the particulate material a can be readily transported with vibration. The casing body 1 is vibratably supported with springs 12.

The lower space 4 is connected with a wave guide 20, on whose end is mounted an air vibration generator 21. The air vibration generator 21 comprises, for example and though not shown, an air source having a suction end and discharge end, a rotary valve having 4 ports, a driving means for driving the rotary valve and generates air vibration by successively changing over the 4 ports for suction and discharge. The air vibration can be of low frequency zone or medium frequency zone and its waveform is changeable into pulse wave, sine wave or the like. The changing is performed by an inverter, and the amplitude of the waveform can also be changed. The above air source is of ring blower type but may be roots blower type, vacuum pump type or like types. The air vibration generator 21 may be, in addition to the above rotary type, bellows type, engine type or like types.

The wave guide 20 is connected to the lower space 4 and there may be interposed in its end part an adjustable-length flexible pipe (not shown). Appropriate adjustment of the length of the flexible pipe could permit the maximum energy of the air vibration to act inside the lower space 4.

The wave guide 20 is equipped with a heating device 30 which can send hot air to vibrating air. The heating device 30 comprises a filter 31 for introducing fresh air, a damper 32, an air-supplying apparatus, i.e. blower 33, and a heater 34. The wave guide 20 forks into two branches each of which connects for drying purpose to the lower space 4.

It is possible to connect the exhaust vent 7a (blower 9 in FIGURE 1) side and the heating device 30 (filter 31 in FIGURE 1) side via piping 35 to form a circulating line, into which dry air can be supplied or to which a dehumidifying unit 36 is connected so that the air in the circulating line can be dehumidified.

A separate wave guide 40 for cooling is connected to the lower space 40. The wave guide 40 is also connected to the air vibration generator 21. The wave guide 40 is connected with a cooler 42 and a blower 41, the latter being omittable.

The upper space 3 of the casing body 1 is provided with a heating means 45 for heating the drying zone, such as microwave heater or far infrared radiation heater. In this embodiment, the heating means 45 comprises a microwave heater and hence includes, as is well known, a magnetron oscillator, a wave guide and a power monitor though not shown.

The particulate material a is successively fed through the feed port 5 over the perforated member 2 of the casing body 1. Vibrating air is sent from the air vibration generator 21 through the wave guide 20 to which hot air is also supplied. The vibrating hot air thus formed that makes up-and-down reciprocal movement (pulsation) passes through a multiplicity of small holes 2a and fluidizes the particulate material a while turning each particles upside down, thereby penetrating the drying effect all over the space. Then, individual particles of the particulate material contact the hot air with most of their surface area and very frequently so that large drying effect is produced even when hot air is supplied from the heater 34 at a very low rate.

In addition, heat such as microwave emitted from the heating means 45 also acts on the particulate material a to promote drying by synergy effect. On this occasion, the particulate material a is transported while making reciprocal movements (pulsation), during which heat energy acts for heating purpose in a most effective way. The particulate material a does not get into floated condition, thereby being undischargeable through the exhaust vents 7a or causing no clogging. Vibrating air also acts on the casing body 1 and causes it to make up-and-down reciprocal vibration due to the elasticity of springs 12, whereby the particulate material is transported.

The particulate material a thus transported to the cooling zone is, like in the drying zone, effectively cooled by air vibration.

The above heating means 45 may not be provided.

The gas supplied to the air-supplying apparatus is not limited to the outside air, but it may be dehumidified air, inert nitrogen or other gases.

The casing body 1 may be provided with a pressure-reducing means 44 comprising a blower, a vacuum pump or the like. Reduction of the pressure in the casing body 1 can increase drying rate even at lower drying temperatures.

In FIGURE 1, 46 represents a binder nozzle for spraying a binder to the particulate material a fed over the perforated member 2, in order to effect granulation. The binder nozzle 46 is connected with a pipe 47 on a point of which a pump 48 is mounted. The other end of the pipe 47 is dipped in a liquid binder contained in a binder tank 49. When the pump 48 is driven, the binder in the binder tank 49 is sprayed through the binder nozzle 46 at a prescribed rate to the particulate material a on the perforated member 2 so that the particulate material is wetted, while being dried at the same time. Then, particles constituting the particulate material are bridged to form larger granules. The binder nozzle 46 is, as is well known, constructed such that its spraying height is adjustable by adjusting a fixing plate (not shown).

The binder nozzle 46 may have any concrete structure. For example, there may be optionally employed one having a needle-like attenuating fluid path or one comprising the above needle-like fluid path and, provided therearound, a second needle-like fluid path, through which high-pressure air is jetted.

The binder nozzle 46 may be mounted on any position and is not limited to one shown in FIGURE 1 and one or more nozzles may be mounted.

Any appropriate binder may be used such as ethyl cellulose solution or polyvinyl alcohol solution, and is selected in consideration of concentration, temperature, viscosity and other using conditions. Although this embodiment uses a liquid binder, dry binder may also be used.

In this first embodiment, as described above, the binder nozzle 46 is mounted on the casing body 1, so that the entire apparatus is usable not only for granulating particulate materials by spraying a binder from the binder nozzle 46 but also for drying particulate materials while stopping the use of the binder nozzle 46. That is, the apparatus is selectively usable either for drying or granulating purpose.

The drying process and granulating process of the present invention are again explained by reference to the granulating and drying apparatus shown in FIGURE 1.

For drying a particulate material a, the particulate material a is fed from above a perforated member 2 horizontally provided inside a casing body 2 and, at the same time, vibrating air generated in an air vibration generator 21 is permitted to act on the particulate material a, thereby drying the particulate material while fluidizing it, and send it towards product outlet. Then, the vibration energy of the vibrating air fluidizes particles constituting the particulate material a sufficiently, so that the material can be dried rapidly and effectively.

For granulating a particulate material a, there is added, to the steps described above in the description of the drying process, i.e. the step of feeding the particulate material a from above the perforated member 2, the step of applying vibrating air to the particulate material a and the step of discharging the particulate material a, the step of spraying a binder through a binder nozzle 46 to the particulate material a fed from above the perforated member, thereby obtaining granules. Then, since vibrating air wave having alternate positive and/or negative waveforms (pulsation wave) fluidizes the particulate material layer itself, lower flow rate and lower heating temperature will work even for particulate materials having high specific gravity, compared with conventional granulating system. This system can also effectively granulate materials having low specific gravity. Besides, appropriate setting of the frequency of the vibrating air used can realize optional adjustment of the overall (bulk) density, i.e. adjustment to heavier weight or lighter weight.

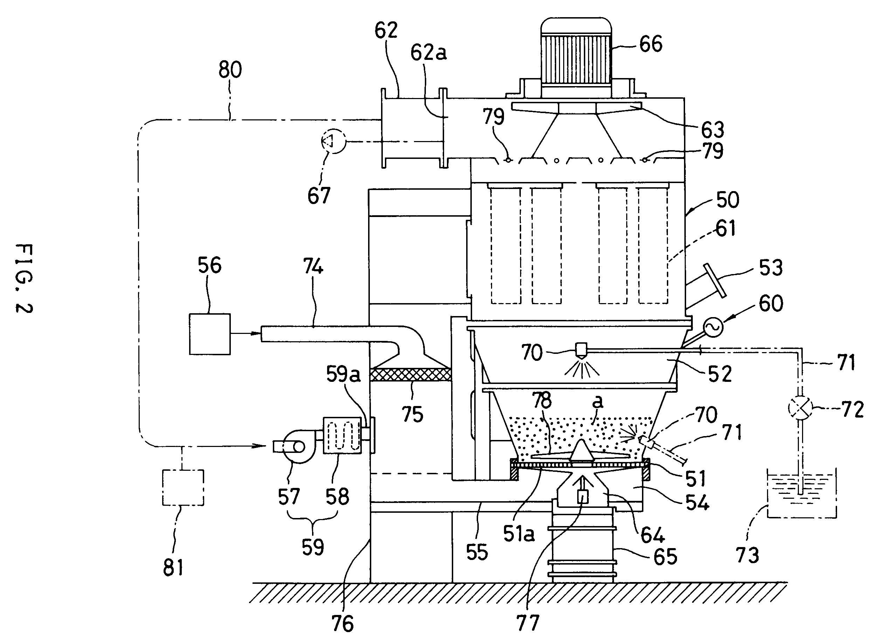

FIGURE 2 shows a schematic view of a second and the most preferred embodiment of the granulating and drying apparatus of the present invention. This granulating and drying apparatus for particulate materials comprises a vertical casing body 50 which is provided at a lower part thereof with a perforated member 51 having a multiplicity of small holes 51a. A particulate material a is introduced through a feed port 53 into an upper space 52 above the perforated member 51. A lower space 54 below the perforated member 51 is connected with a wave guide 55, which is connected via a pipe 74 to an air vibration generator 56 that generates air vibration by applying acoustic wave of low frequency or medium frequency.

The wave guide 55 is connected, via a pipe 59a, to a heating device 59 comprising an air-supplying apparatus (blower) 57 and a heater 58 so that hot air acts on the vibrating air. The hot, vibrating air is passed through the wave guide 55 and the lower space 54 and then through a multiplicity of small holes 51a of the perforated member 51, into the upper space 52. In the upper space 52 the vibrating air then dries particles constituting the particulate material a, while fluidizing them. The vibrating hot air, making up-and-down reciprocal movements (pulsation) and passing through a multiplicity of small holes 51a, fluidizes the particulate material a while turning each particles upside down, thereby penetrating the drying effect all over the space. Then, individual particles of the particulate material contact the hot air with most of their surface area and very frequently so that large drying effect is produced even when hot air is supplied from the heater 58 at a low rate.

In addition, heat energy such as microwave or far infrared radiation emitted from the heating means 45 also acts on the particulate material a to promote drying by synergy effect. On this occasion, the particulate material a is transported while making reciprocal movements (pulsation), during which the heat energy such as microwave or far infrared radiation emitted from the heating means acts for heating purpose in a most effective way. The particulate material a does not get into floated condition, and hence there is no fear that the particulate material should float up to clog bag filters 61 or be discharged, via the exhaust vent 62a, from the exhaust pipe 62. The gas exhausted by a fan 63 driven by a motor 66 can be again supplied to the system. The particulate material a thus dried is taken out through a product outlet port 64 into a recervoir 65.

The casing body 50 may be provided with a pressure-reducing means 67 comprising a blower, a vacuum pump or the like. Reduction of the pressure inside the casing body can increase the drying rate even at a low drying temperature.

In FIGURE 2, 70 represents a binder nozzle for spraying a binder to the particulate material a fed over the perforated member 51, in order to effect granulation. The binder nozzle 70 is connected with a pipe 71 on a point of which a pump 72 is mounted. The other end of the pipe 71 is dipped in a liquid binder contained in a binder tank 73. As described for the above embodiment, when the pump 72 is driven, the binder in the binder tank 73 is sprayed through the binder nozzle 70 at a prescribed rate to the particulate material a on the perforated member 51 so that the particulate material is wetted, while being dried at the same time. Then, particles constituting the particulate material are bridged to form larger granules. The binder nozzle 70 is, as is well known, constructed such that its spraying height is adjustable by adjusting a fixing plate (not shown).

The binder nozzle 70 may be mounted on any position and is not limited to one shown in FIGURE 2 and one or more nozzles may be mounted.

In this second embodiment also, like in the first embodiment, the binder nozzle 70 is mounted on the casing body 1, so that the entire apparatus is usable not only for granulating particulate materials by spraying a binder from the binder nozzle 70 but also for drying particulate materials by stopping the use of the binder nozzle 70.

It is not necessary to explain again the granulating process and drying process of the present invention utilizing the apparatus shown in FIGURE 2, since these processes are readily understandable from the explanation given above by reference to FIGURE 1.

In FIGURE 2, 75 represents a filter, 76 a frame, 77 a valve for opening or closing product outlet port 64 and 78, which may not be equipped, a stirring impeller. 79 represents a damper for scraping off dust adhering to bag filters 61.

In this second embodiment, it is possible to connect, as shown in chain line, the exhaust vent 62a (in FIGURE 2, exhaust pipe 62) of the casing body 50 with the air-supplying apparatus 57 via piping 80, to form a circulating line, into which dry air is supplied or to which a dehumidifier is connected so that the air in the circulating line can be dehumidified.

The gas supplied to the air-supplying apparatus 57 is not limited to the outside air as shown in FIGURE 2, but may be dehumidified air or other gases.

An experiment was conducted for comparison purpose with a conventional granulating apparatus as shown in FIGURE 4 and the apparatus of the present invention as shown in FIGURE 2, to obtain the results shown in Table 1.

Table 1

| | Conventional apparatus | Apparatus of the present invention |
|---|---|---|
| ① Composition of material | lactose 70 wt% <br><br> corn starch 30 wt% | lactose 70 wt% <br><br> corn starch 30 wt% |
| ② Amount of material fed | 5 kg | 5 kg |
| ③ Composition of binder | hydroxypropylcellulose <br><br> (HPC-L)　　　　　　　8 wt% <br> distilled water　　　　92 wt% | hydroxypropylcellulose <br><br> (HPC-L)　　　　　　　8 wt% <br> distilled water　　　　92 wt% |
| ④ Amount of binder sprayed | 3.0 kg | 3.0 kg |
| ⑤ Air flow rate | 1.9 to 3.4 $m^3$/min (0.8 to 1.4 m/s) | 1.0 to 1.6 $m^3$/min (0.4 to 0.67 m/s) |
| ⑥ Hot air temperature | 70°C | 50°C |
| ⑦ Rate of binder sprayed | 150 g/min | 200 g/min |
| ⑧ Spraying air pressure | 3.0 kg/$cm^2$G | 3.0 kg/$cm^2$G |
| ⑨ Height of nozzle | 480 mm | 420 mm |
| (to be continued) | | |

EP 0 570 218 A1

|  | Conventional apparatus | Apparatus of the present invention |
|---|---|---|
| (continued) | | |
| ⑩ Water content of material during granulation | 15 to 15.5 %WB | 12 to 12.5 %WB |
| | Air flow rate was initially set at a lower value to maintain good fluidization state and, after spraying 0.5 kg of binder, increased to the prescribed flow rate. | Very stable fluidization was obtained from an initial period and hence the air flow rate was maintained at the same value from the start until end of the operation. |
| ⑪ Average particle size during granulation | 320 µm | 320 µm |
| ⑫ Apparent density | 0.47 g/cc | 0.47 g/cc |
| ⑬ Uniformity | 1.63 | 1.63 |

EP 0 570 218 A1

From Table 1, the following facts have become clear.

With the apparatus of the present invention, complete fluidization can be achieved with the air flow rate ⑤ being only about 50% of that with conventional granulating apparatus. Thanks to this fact, there can be overcome various drawbacks associated with the use of the conventional apparatus, e.g. increased power consumption and generation of irregular phenomena that would impair fluidization, such as channelling and bubbling of the material processed. It is considered that the channelling and like irregular phenomena are prevented in the present invention also by applying air vibration wave (pulse wave). This is attributable to that the vibrating air of positive and/or negative waveform applied to a powder layer prevents the above irregular phenomena such as channelling from occurring at the very beginning.

With respect to the hot air temperature employed ⑥, that in the present invention is as low as 50°C -- about 30% lower than that, 70°C, with the conventional apparatus. This is considered to be due to a very high efficiency of heat exchange achieved by up-and-down or to-and-fro vibration of air in minute zones all through the powder layer.

The rate of binder sprayed ⑦ is 200 g/min in the present invention, showing about 30% higher than that, 150 g/min, with the conventional apparatus. This is considered to be due to the same reason as above.

The height ⑨ of the binder nozzle is 420 mm with the present invention, i.e. about 60 mm lower than 480 mm with the conventional apparatus. This low setting of the nozzle height became possible thanks to lower setting of the height of powder in fluidized bed realized with the present invention.

The water content ⑩ of the material in the fluidized bed during granulation is 12 to 12.5%WB with the present invention compared with 15 to 15.5%WB with the conventional apparatus. This means that a water content of about 3% lower than that with conventional apparatus can still yield granules having the same quality. This is also considered to be due to the same reason as for the above hot air temperature.

Obviously, numerous modifications and variations of the present invention are possible in light of the above teachings. It is therefore to be understood that within the scope of the appended claims, the invention may be practiced otherwise than as specifically described herein.


**Claims**

1. A process for drying particular material, which comprises disposing the particulate material (a) on a horizontal perforated member (2, 51) and causing vibrating air to act on the particulate material (a) on said perforated member (2, 51) thereby fluidizing and drying the particulate material (a).

2. A process according to claim 1, further comprising heating the particulate material (a) on said perforated member (2, 51).

3. A process according to claim 1 or 3, further comprising reducing the pressure around the particulate material (a).

4. A process for granulating particulate material, which comprises disposing the particulate material (a) on a horizontal perforated member (2, 51) and, while spraying a binder onto the particulate material (a) on said perforated member (2, 51), causing vibrating air to act on the particulate material (a) thereby fluidizing the particulate material (a) and forming granules therefrom.

5. A process according to claim 4, further comprising heating and drying the particulate material (a) onto which said binder is being sprayed.

6. A process according to claim 4 or 5, further comprising reducing the pressure around the particulate material (a).

7. An apparatus for drying particulate material, which comprises:
   a casing body (1, 50) whose interior is divided by a perforated member (2, 51) into an upper space (3, 52) and a lower space (4, 54), said upper space (3, 52) being provided with a feed port (5, 53) for the particulate material (a) and an exhaust vent (7a, 62a); and
   an air vibration generator (21, 56) that generates vibrating air and that supplies the interior of said casing body (1, 50) with the vibrating air thus generated.

8. An apparatus for granulating particulate material, which comprises:
   a casing body (1, 50) whose interior is divided by a perforated member (2, 51) into an upper space (3, 52) and a lower space (4, 54), said upper space (3, 52) being provided with a feed port (5, 53) for the particulate material (a) and an exhaust vent (7a, 62a);

an air vibration generator (21, 56) that generates vibrating air and that supplies the interior of said casing body (1, 50) with the vibrating air thus generated; and

a binder nozzle (46, 70) for spraying a binder onto said particulate material (a) on said perforated member (2, 51) to obtain granules therefrom.

9. An apparatus according to claim 7 or 8, further comprising a heating device (30, 59) comprising a heater (34, 58) and an air-supplying apparatus (33, 57) for supplying hot vibrating air to the interior of said casing body (1, 50).

10. An apparatus according to any of claims 7 to 9, further comprising a heating means (45, 60) for heating said particulate material (a) in said upper space (3, 52).

11. An apparatus according to any of claims 7 to 10, further comprising a pressure-reducing means (44, 67) for reducing the pressure inside said casing body (1, 50).

12. An apparatus according to any of claims 7 to 11, further comprising a circulating line formed by connecting through piping (35, 80) the exhaust vent (7a, 62a) side and said heating device (30, 59) side of said casing body (1, 50), to which circulating line either dry air can be supplied or a dehumidifying unit (36, 81) is connected so that air circulating in said line can be dehumidified.

13. An apparatus according to claim 8, said apparatus being usable also for drying purposes by stopping use of said binder nozzle (46, 70).

FIG. 1

FIG. 2

FIG. 3

EP 0 570 218 A1

14

FIG. 4

European Patent
Office

**EUROPEAN SEARCH REPORT**

Application Number

| DOCUMENTS CONSIDERED TO BE RELEVANT | | EP 93303696.4 |
|---|---|---|

| Category | Citation of document with indication, where appropriate, of relevant passages | Relevant to claim | CLASSIFICATION OF THE APPLICATION (Int. Cl.5) |
|---|---|---|---|
| A | DE - A - 3 337 830<br>(FREUND INDUSTRIAL CO)<br>   * Examples; claims; fig. *<br>-- | 7-13 | B 01 J 8/40<br>B 01 J 2/16<br>F 26 B 3/092 |
| A | DE - A - 2 753 409<br>(AKADEMIA EKONOMIEZNA IM<br>OSKARA LANGEGO)<br>   * Totality *<br>-- | 1-13 | |
| A | DE - B - 1 069 576<br>(FRANCOIS JACQUES BARTHELMY<br>BERRY)<br>   * Totality *<br>-- | 1-13 | |
| A | CH - A - 615 269<br>(GEBRÜDER BÜHLER AG)<br>   * Page 6, left column, line<br>     3 - page 7, right column,<br>     line 43; claims; fig. *<br>---- | 1-6 | |
| | | | TECHNICAL FIELDS<br>SEARCHED (Int. Cl.5)<br><br>B 01 J<br>F 26 B |

The present search report has been drawn up for all claims

| Place of search | Date of completion of the search | Examiner |
|---|---|---|
| VIENNA | 20-08-1993 | TENGLER |